# EUROPÄISCHE PATENTSCHRIFT

(11) **EP 0 585 597 B1**
(45) Veröffentlichungstag und Bekanntmachung des Hinweises auf die Patenterteilung: **12.05.1999**
(21) Anmeldenummer: 93111923.4
(22) Anmeldetag: 26.07.1993
(51) Int. Cl.: H01F 38/42

(54) **Hochspannungs-Zeilentransformator für einen Fernsehempfänger**
High voltage line transformer for a TV receiver
Transformateur de ligne à haute tension pour un récepteur de télévision

(30) Priorität: 04.08.1992 DE 4225692; 13.01.1993 DE 4300624; 23.06.1993 DE 4320714
(43) Veröffentlichungstag der Anmeldung: 09.03.1994
(73) Patentinhaber: DEUTSCHE THOMSON-BRANDT GMBH, 78048 Villingen-Schwenningen (DE)
(72) Erfinder: Goseberg, Walter, D-30457 Hannover (DE); Sander, Hans-Werner, D-30559 Hannover (DE); Heidrich, Rolf, D-30453 Hannover (DE)

(56) Entgegenhaltungen:
- EP-A- 0 033 450
- WO-A-93/04557
- DE-A- 1 904 757
- GB-A- 2 100 524
- US-A- 2 800 608
- US-A- 2 825 849

## Beschreibung

Die Erfindung geht aus von einem Hochspannungs-Zeilentransformator gemäß dem Oberbegriff des Anspruchs 1.

Bei einem derartigen Hochspannungstransformator entstehen im Hochspannungskreis am Zeilenbeginn, wenn die Hochspannungsgleichrichterdioden nicht mehr leitend sind, bedingt durch Streuinduktivitäten und Streukapazitäten hochfrequente Schwingungen, die sich auf den Primärkreis übertragen. Da die Zeilenablenkspulen durch den während einer Hinlaufhälfte leitenden Schalttransistor und die während der anderen Hinlaufhälfte leitende Rücklaufdiode nicht vollständig vom Transformator entkoppelt sind, entstehen dadurch im Zeilenablenkstrom am Zeilenbeginn gegenüber der Zeilenfrequenz hochfrequente Oberwellenströme. Diese Oberwellen führen zu sogenannten Gardineneffekten am oberen Bildrand. Darüberhinaus bewirken die Oberwellen Verluste in der Wicklung und dem Ferrit des Kernes des Transformators. Außerdem wirken die Oberwellen wegen ihrer hohen Frequenz als Störstrahler auf die bei niedrigem Signalpegel arbeitenden signalverarbeitenden Stufen des Fernsehempfängers.

Zur Verringerung der Amplitude dieser Oberwellen ist es bekannt, in den Weg der Betriebsspannung zu der Zeilenendstufe einen sogenannten Ri-Kreis einzuschalten. Dieser besteht aus einem gedämpften Parallel-Schwingkreis, der auf die Frequenz der Oberwellen abgestimmt ist. Der Ri-Kreis bildet eine Falle für diese Frequenzen, so daß die Amplitude der Oberwellen im Zeilenablenkstrom verringert wird. Ein derartiger Ri-Kreis ist jedoch relativ teuer, zumal er für den gesamten Betriebsstrom der Zeilenendstufe ausgelegt sein muß.

Ein Hochspannungs-Zeilentransformator nach dem Oberbegriff des Anspruchs 1 ist aus der DE-A-40 39 373 bekannt. Aus der EP-A-0 033 450 ist ein Hochspannungs-Zeilentransformator bekannt, bei dem die Hochspannungswicklung in zwei Teilwicklungen unterteilt ist, und zwischen die eine oder zwei Dioden in Serienschaltung geschaltet sind. Durch eine hohe Symmetrie lassen sich hier Probleme bei der Spannungsfestigkeit beser beherrschen. Aus der DE-A-1 904 757 ist ein Zeilenausgangstransformator mit einer Wicklung zur Hochspannungserzeugung bekannt, mit der über eine Hochspannungskaskade die Hochspannung für ein Fernsehgerät erzeugt wird. Dieser Transformator besitzt eine Vielzahl von Sekundärwicklungen, wobei die Hochspannungswicklung als äußerste Wicklung mit sehr geringer Breite gegenüber den anderen Wicklungen ausgebildet ist.

Der Erfindung liegt die Aufgabe zugrunde, einen Hochspannungs-Zeilentransformator so auszubilden, daß ohne Verwendung des beschriebenen Schwingkreises die Amplitude der im Zeilenablenkstrom auftretenden Oberwellen auf ein tolerierbares Maß verringert wird. Diese Aufgabe wird durch die im Anspruch 1 angegebene Erfindung gelöst. Vorteilhafte Weiterbildungen der Erfindung sind in den Unteransprüchen angegeben.

Die Erfindung besteht somit im wesentlichen in einer neuartigen geometrischen Bemessung des Hochspannungstransformators. Während bei bekannten Hochspannungstransformatoren das Verhältnis der Gesamtlänge der Wicklungen in Axialrichtung zum äußeren Durchmesser der Hochspannungswicklung deutlich größer als 1 war, ist bei dem erfindungsgemäßen Transformator dieses Verhältnis deutlich kleiner als 1 bemessen. Im Gegensatz zu einem in Axialrichtung langen Transformator mit demgegenüber geringen Durchmesser wird ein Transformator geschaffen, der in Axialrichtung relativ kurz ist und einen demgegenüber größeren äußeren Durchmesser der Wicklungen aufweist. Diese Bemessung muß zunächst nachteilig erscheinen, und zwar aus folgenden Gründen:

Durch die verringerte Baulänge in Axialrichtung wird die Gesamtzahl der die Hochspannungswicklung aufnehmenden Kammern zwangsläufig verringert, z.B. von 16 auf 9. Die Gesamtwindungszahl der Hochspannungswicklung indessen muß zur Erzielung der vorgegebenen Hochspannung gleich bleiben. Das bedeutet, daß die Zahl der Windungen pro Kammer steigt, die einzelnen Kammern also voller gewickelt werden. Dadurch wird die Eigenkapazität der in einer Kammer liegenden Wicklung erhöht. Dadurch wiederum wird die Resonanzfrequenz jeder Wicklung verringert, so daß für die Hochspannungswicklung z.B. keine Abstimmung auf 21 H sondern nur noch eine Abstimmung auf 13 H möglich ist, wobei H die Zeilenfrequenz ist. Durch die verringerte Resonanzfrequenz indessen wird die Amplitude der Oberwellen nach Fourier wieder erhöht. Man mußte also zunächst annehmen, daß durch die neuartige Ausbildung des Transformators die Amplitude der störenden Oberwellen im Zeilenablenkstrom weiter ansteigt.

Überraschender Weise zeigte sich jedoch, daß die Amplitude der Oberwellen nicht größer, sonder beträchtlich geringer wurde. Der Grund für die überraschende Wirkung ist folgender: Außer der Wicklungskapazität jeder in einer Kammer liegenden Teilwicklung der Hochspannungswicklung ist auch noch eine Koppelkapazität zwischen jeder Hochspannungswicklung und der Primärwicklung wirksam. Diese Koppelkapazität pro Kammer wird durch den erfindungsgemäßen Aufbau im wesentlichen nicht geändert. Die Gesamtzahl der Kammern wird jedoch durch die verringerte Länge in Axialrichtung beträchtlich herabgesetzt, z.B. von 15 auf 9. Dadurch wird die Summe der Koppelkapazitäten zwischen jeweils einer Hochspannungswicklung in einer Kammer und der Primärwicklung herabgesetzt. Die insgesamt wirksame kapazitive Kopplung zwischen der Hochspannungswicklung und der Primärwicklung wird also verringert. Das bedeutet, daß der insgesamt wirksame Einfluß der Sekundärwicklung auf die Primärwicklung entsprechend verringert wird. Dieser Einfluß ist aber entscheidend dafür, wieweit die in der Sekundärwicklung durch Resonanz erzeugten Oberwellen in den Zeilenablenkstrom eingekoppelt werden. Da durch die Erfindung der kapazitive Einfluß der Sekundärwicklung auf die Primärwicklung beträchtlich reduziert wird, wird auch die Amplitude der Oberwellen im Zeilenablenkstrom entsprechend herabgesetzt. Es ergibt sich somit ein Transformator, bei dem ohne nennenswerten Mehraufwand eine deutliche Reduzierung der störenden Oberwellen im Zeilenablenkstrom erreicht wird. Die Reduzierung ist derart gut, daß der bisher verwendete Ri-Kreis im Weg des Zeilenablenkstroms entfallen kann. Der beschriebene Nachteil durch die verringerte magnetische Kopplung zwischen der Sekundärwicklung und der Primärwicklung wird also in überraschender Weise durch den Vorteil der verringerten insgesamt wirksamen kapazitiven Kopplung zwischen diesen Wicklungen in überraschender Weise überkompensiert.

Neuartige Hochspannungstransformatoren nach dem Diodensplitprinzip für besonders hohe Hochspannungen von 30 - 35 kV erfordern eine Vielzahl von etwa 12 bis 15 Hochspannungsgleichrichterdioden, die in Axialrichtung versetzt über den Kammerwänden oder den Kammern am Spulenkörper angeordnet sind. Durch die erfindungsgemäße geringe Baulänge des Spulenkörpers in Axialrichtung kann es schwierig werden, eine derartige Vielzahl von Dioden am Spulenkörper unterzubringen. Diese Schwierigkeit wird durch das Merkmal beherrscht, daß jeweils mehrere, insbesondere vier Dioden über den Umfang verteilt in derselben axialen Lage an dem Kammerspulenkörper angeordnet sind. Durch diese Lösung bereitet es auch bei einem in Axialrichtung kurzen Spulenkörper keine Schwierigkeiten, die notwendige Anzahl von Dioden unterzubringen. Eine solche Lösung ist näher beschrieben in der älteren Anmeldung DE-A-41 29 678.

Gemäß einer Weiterbildung der Erfindung ist der Raum zwischen der Oberkante der Primärwicklung und der Unterkante der Sekundärwicklung weitestgehend elektrisch feldfrei ausgebildet. Durch diese Lösung können die dielektrischen Verluste durch Verschiebeströme beträchtlich verringert werden. Ein derartiger elektrisch feldfreier Raum läßt sich dadurch erreichen, daß die Primärwicklung und die Sekundärwicklung derart aufgeteilt und gepolt sind, daß sich in den einander zugewandten Bereichen der Wicklungen Impulse etwa gleicher Amplitude und Polarität ergeben. Damit die Impulse an der Oberkante der Primärwicklung in Axialrichtung des Spulenkörpers eine möglichst gleiche Amplitude aufweisen, die der Amplitude am Grund der Hochspannungswicklung entspricht, ist die Primärwicklung vorzugsweise in mehrere, radial übereinander liegende Lagen aufgeteilt. Die Betriebsspannung wird der Primärwicklung am unteren, also dem Kern zugewandten Ende zugeführt, damit die Primärwicklung am äußeren Umfang eine Impulsspannung führt, die in Amplitude, Frequenz und Phase möglichst gleich der Impulsspannung am Grund der Hochspannungswicklung ist. Ein derartiger Hochspannungstransformator mit elektrisch feldfreiem Raum zwischen der Primärwicklung und der Sekundärwicklung ist näher beschrieben in der DE-A-40 39 373.

Die Erfindung wird im folgenden anhand der Zeichnung näher erläutert. Darin zeigen
- Fig. 1: ein Schnitt durch einen erfindungsgemäßen Hochspannungstransformator,
- Fig. 2: ein Ersatzschaltbild zur Erläuterung der Wirkungsweise,
- Fig. 3: eine Anordnung der Hochspannungsgleichrichterdioden in einer Seitenansicht von Fig. 1 und
- Fig. 4: eine Draufsicht auf einen Transformator gemäß Fig. 3.

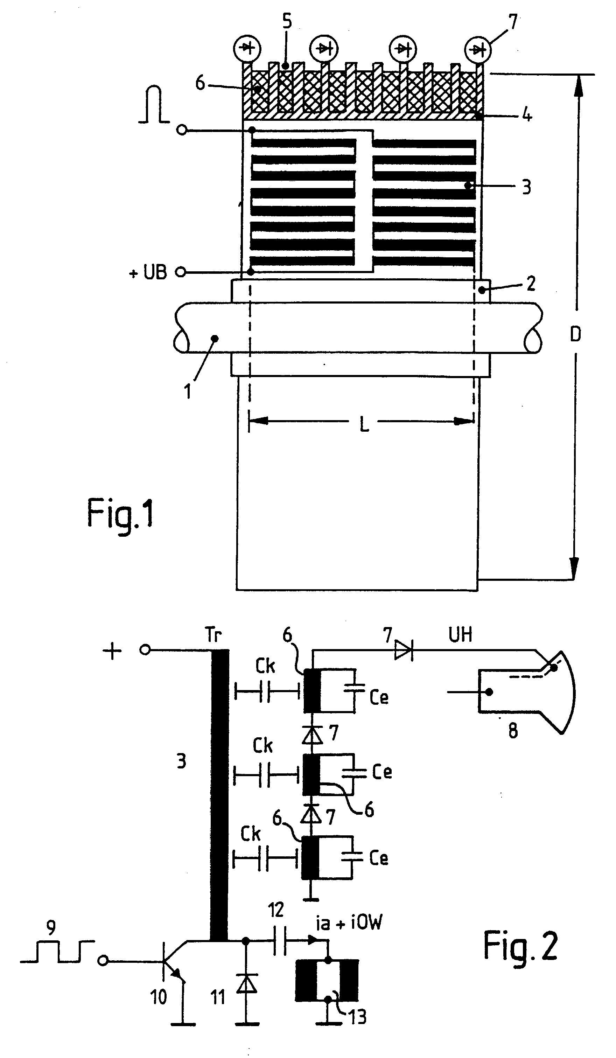

Fig. 1 zeigt einen Hochspannungstransformator für einen Fernsehempfänger mit dem Kern 1, dem Spulenkörper 2 für die Primärwicklung 3, dem Kammerspulenkörper 4 für die Hochspannungswicklung 6, die in den Kammern 5 des Spulenkörpers 4 angeordnet ist. Über den die Kammern 5 bildenden Wänden des Spulenkörpers 4 sind Hochspannungsgleichrichterdioden 7 angeordnet, die mit der Hochspannungswicklung 6 nach dem Diodensplitprinzip zusammengeschaltet sind. Die Primärwicklung 3 enthält zwei parallel geschaltete, in Axialrichtung hintereinander liegende Lagenwicklungen mit je 8 Lagen.

Das Verhältnis der axialen Länge L der Wicklungen 3, 6 zum äußeren Durchmesser D der Wicklung 6 ist deutlich kleiner als 1 bemessen und liegt in der Größenordnung von 0,5 bis 0,85. Durch diesen in Axialrichtung kurzen, aber in Radialrichtung hohen Aufbau wird die insgesamt wirksame Koppelkapazität zwischen der Primärwicklung 3 und der Hochspannungswicklung 6 stark verringert. Das beruht, wie bereits beschrieben, darauf, daß die Zahl der Kammern 5, deren Wicklungen je eine bestimmte Koppelkapazität zur Primärwicklung bilden, beträchtlich herabgesetzt ist. Die Gesamtfläche zwischen der Sekundärwicklung 6 und der Primärwicklung 3, die die gesamte Koppelkapazität zwischen diesen Wicklungen bestimmen, ist gegenüber bekannten Transformatoren beträchtlich verringert. Durch die verringerte gesamte kapazitive Kopplung wird auch die Amplitude der kapazitiven Ströme, die die Amplitude der im Zeilenablenkstrom erzeugten unerwünschten Oberwellen erzeugt, entsprechend verringert.

Fig. 2 zeigt ein elektrisches Ersatzschaltbild zur Erläuterung der Wirkungsweise. Dargestellt sind der Zeilenablenktransformator Tr mit der Primärwicklung 3 und den Hochspannungswicklungen 6, die je in einer Kammer 5 gemäß Fig. 1 liegen. In der Praxis sind etwa 6 - 10 derartige Hochspannungswicklungen vorgesehen. In Reihe mit den Wicklungen 6 liegen die Hochspannugsgleichrichterdioden 7. Die erzeugte Hochspannung UH wird der Bildröhre 8 zugeführt. Weiter sind dargestellt der von der zeilenfrequenten Schaltspannung 9 gesteuerte Schalttransistor 10, die Rücklaufdiode 11, der Tangenskondensator 12 und die Zeilenablenkspulen 13. Durch die Ablenkspulen 13 fließt der Zeilenablenkstrom ia überlagert von hochfrequenten Oberwellen iOW. Jede Hochspannungswicklung 6 bildet mit ihrer Wickelkapazität Ce einen Schwingkreis, der auf eine ungeradzahlige Harmonische der Zeilenfrequenz H abgestimmt ist, z.B. 13 H. Jeweils zwischen einer Hochspannungswicklung 6 und der Primärwicklung 3 ist die Koppelkapazität Ck wirksam. Insgesamt ist also zwischen der gesamten Hochspannungswicklung 6 und der Primärwicklung 3 eine Koppelkapazität von n*Ck wirksam, wobei n die Anzahl der Hochspannungswicklungen 6 und damit der Kammern 5 ist. Durch die verringerte Baulänge L in Axialrichtung wird nun der Wert von n beträchtlich verringert und somit die insgesamt zwischen der Hochspannungswicklung 6 und der Primärwicklung 3 wirksame Koppelkapazität herabgesetzt.

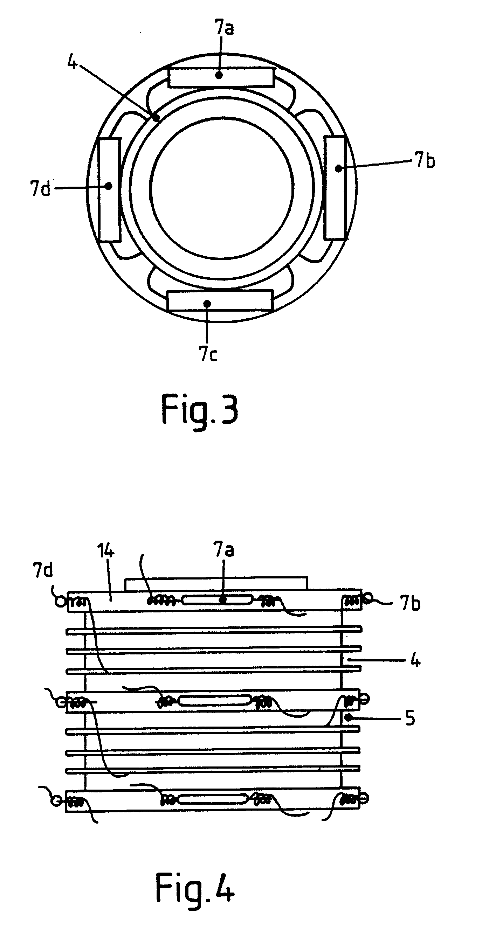

Fig. 3 zeigt eine besondere Anordnung der Dioden 7 an dem Spulenkörper 4. Es sind jeweils vier Dioden 7a - 7d an derselben axialen Stelle gleichmäßig über den Umfang des Spulenkörpers 4 verteilt über den Kammern oder den Kammerwänden angeordnet. Auf diese Weise können bei einem Transformator mit der Diodenanordnung gemäß Fig. 1 trotz der geringen Baulänge L in Axialrichtung z.B. 16 Dioden an dem Spulenkörper 4 untergebracht werden.

Fig. 4 zeigt eine Lösung gemäß Fig. 3, bei der über drei breiteren Kammerwänden 14 je vier Dioden 7a - 7d, also insgesamt 12 Dioden angeordnet sind. Die Zahl der Kammern 5 des Kammerspulenkörpers 4 liegt vorzugsweise in der Größenordnung von 6 - 10. Die Zahl der Lagen der Primärwicklung 3 oder der beiden Teilwicklungen liegt vorzugsweise in der Größenordnung von 5 - 12.

Einer Weiterbildung der Erfindung liegt die Aufgabe zugrunde, durch eine neuartige Konstruktion des Transformators und ohne Erhöhung der Abmessungen die thermische Belastung der Dioden und einzelner Hochspannungswicklungen zu verringern.

Gemäß dieser Weiterbildung sind alle Dioden nur an den beiden Kammerwänden an den beiden Enden des Spulenkörpers angeordnet. Dabei sind vorzugsweise die beiden Kammern an den beiden Enden des Spulenkörpers zu einem geringeren Teil mit einer Teilwicklung gefüllt als die übrigen Kammern, vorzugsweise nur zur Hälfte gefüllt oder völlig leer gelassen. Da alle Dioden nur an den Kammerwänden an den Enden des Spulenkörpers untergebracht werden müssen, sind mehrere Dioden, insbesondere vier, jeweils über den Umfang verteilt an einer Kammerwand angeordnet.

Dadurch, daß alle Dioden nur an den Enden des Spulenkörpers liegen, die Teilwicklungen der Hochspannungswicklung jedoch in den Kammern über dem Spulenkörper verteilt sind und die Dioden schaltungsmäßig zwischen den Teilwicklungen liegen, kommt es zu relativ langen Rückführungen zwischen den Enden der Teilwicklungen und den Anschlüssen der Dioden. Dabei ist es dann nicht möglich, Kammern zu bewickeln, über die bereits ein Wicklungsanschluß in Axialrichtung zurückgeführt ist. Derartige Wicklungsanschlüsse müssen dann im Regelfall über mehrere bereits gewickelte Kammern verlaufen. Eine derartige Anordnung läßt sich erzielen, wenn gemäß einer Weiterbildung der Erfindung die in Axialrichtung des Spulenkörpers aufeinanderfolgenden Kammern in einer solchen Reihenfolge gewickelt werden, daß sich die Wicklungsdrähte von einer Diode oder einem Stützpunkt zu einer Kammer nur über solche Kammern legen, die bereits vorher bewickelt sind. Dabei wird der Richtungssinn in Axialrichtung, in dem die einzelnen Kammern nacheinander bewickelt werden, für aufeinanderfolgende Gruppen von Kammern entgegengesetzt ausgebildet. Ein derartiges Wickelverfahren ist beschrieben in der älteren Patentanmeldung DE-A-41 29 678.

Diese Lösung beruht auf folgender Erkenntnis. Durch die benachbarte Lage von Teilwicklungen der Hochspannungswicklung und der Dioden kommt es zu einer beachtlichen gegenseitigen Erwärmung von Wicklungen und Dioden. Diese Erwärmung ist besonders groß in der in Axialrichtung gesehenen Mitte des Spulenkörpers. Deshalb werden die Dioden aus der Mitte des Spulenkörpers weg an den Rand des Spulenkörpers verlegt, wo die thermische Belastung wesentlich geringer ist. Die Dioden werden somit aus dem Bereich, in dem sie besonders gefährdet sind, herausverlegt, also gewissermaßen aus der "gefährlichen Schußlinie" gebracht. Es kommt dabei zu einer optimalen Entkopplung von zwei durch die Teilwicklungen und die Dioden gebildeten Wärmequellen, indem diese Wärmequellen nunmehr gleichmäßiger über einen Zylinder verteilt sind.

Insgesamt ergibt sich eine beachtliche Verringerung der thermischen Belastung der Dioden, so daß entweder die Dioden hinsichtlich Spannung und Strom weiter ausgefahren werden können, billigere Dioden eingesetzt werden können oder die Ausfallquote von Dioden durch thermische Belastung verringert wird.

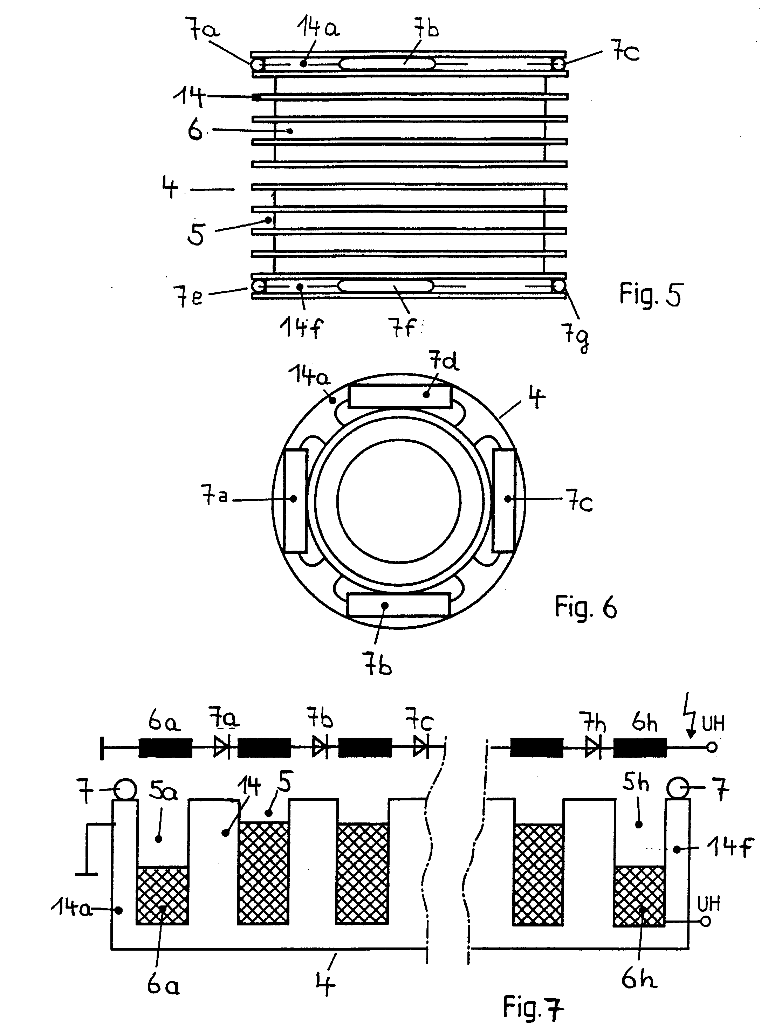

Diese Weiterbildung wird im folgenden anhand der Figuren 5 - 7 erläutert.

Fig. 5 zeigt den Kammerspulenkörper 4 mit einer Vielzahl von durch Kammerwände 14 gebildeten Kammern 5, in denen Teilwicklungen 6 einer Hochspannungswicklung angeordnet sind. Der Spulenkörper 4 enthält insgesamt acht HochspannungsgleichrichterDioden 7a - 7h. Die Dioden 7a - 7d sind über den Umfang verteilt an der Kammerwand 14a an einem Ende des Spulenkörpers 4 und die Dioden 7e - 7h an der Kammerwand 14f am anderen Ende des Spulenkörpers 4 angeordnet. Alle dazwischen liegenden Kammern 5 oder Kammerwände 14 enthalten somit keine Dioden.

Fig. 6 zeigt, daß die Dioden 7a - 7d gleichmäßig über den Umfang verteilt an der Kammerwand 14a des Spulenkörpers 4 angeordnet sind. Auf gleiche Weise sind die Dioden 7e - 7h an der gegenüberliegenden Kammerwand 14f angeordnet.

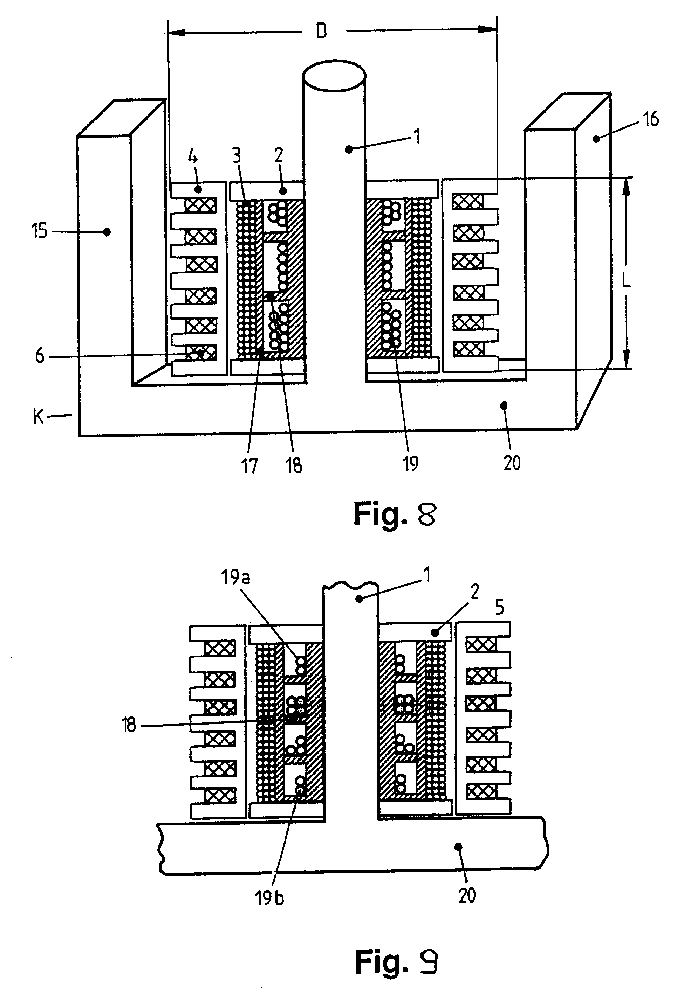

Fig. 7 zeigt in vergrößerter teilweiser Schnittdarstellung den Spulenkörper 4 mit den Kammerwänden 14, den beiden Kammerwänden 14a und 14f an den beiden Enden des Spulenkörpers 4, den Kammern 5, den Hochspannungsteilwicklungen 6a - 6h und den Dioden 7. Im oberen Teil der Fig. 7 ist das elektrische Ersatzschaltbild dargestellt, bei dem jeweils eine Diode 7 zwischen zwei Teilwicklungen 6 liegt. In der räumlichen Anordnung liegen jedoch alle Dioden 7a - 7h nur an den beiden Kammerwänden 14a und 14f.

Die beiden Kammern 5a und 5h an den beiden Enden des Spulenkörpers 4 sind nur zur Hälfte mit den Teilwicklungen 6a und 6h gefüllt. Durch diese Lösung ergibt sich eine weitere thermische Entlastung der Dioden 7, da diese nunmehr von dem oberen Rand der Wicklungen 6a und 6h einen vergrößerten Abstand aufweisen, während der Abstand jeweils zu der nächsten in Axialrichtung folgenden Teilwicklung bereits so groß ist, daß dadurch eine thermische Belastung der Diode 7 schon beträchtlich herabgesetzt ist.

Einer anderen Weiterbildung der Erfindung liegt die Aufgabe zugrunde, Kosten und Gewicht eines derartigen Hochspannungstransformators ohne Versclechterung seiner elektromagnetischen Eigenschaften zu verringern. Diese Aufgabe wird dadurch gelöst, daß der Ferritkern als einteiliger Kern mit offenen Enden der Kernschenkel ausgebildet ist
Ein einteiliger Ferritkern, bei dem also kein definierter enger Luftspalt zwischen zusammengesetzten Kernschenkeln gebildet ist, hat einen relativ großen wirksamen Luftspalt und scheint daher zunächst für den Hochspannungstransformator für einen Fernsehempfänger nachteilig oder nicht geeignet. Es hat sich jedoch gezeigt, daß bei entsprechender gemoetrischer Bemessung des Kernes und des Spulenkörpers die gestellten Anforderungen erfüllt werden können. Diese besondere Bemessung besteht darin, daß das Verhältnis der axialen Länge des Spulenkörpers zum äußeren Durchmesser im Gegensatz zu bekannten Transformatoren deutlich kleiner als 1 bemessen wird. Dadurch wird erreicht, daß der Spulenkörper auf dem Kernschenkel nur eine möglichst geringe axiale Länge einnimmt. Das ist vorteilhaft, weil wegen des großen Luftspaltes die Kernwirkung, und zwar die Induktivität einer bestimmten Wicklung auf dem Kern, zum offenen Ende des Kernschenkels stark abnimmt. Eine ausreichende Annäherung an die optimalen Verhältnisse bei einem geschlossenen Kern wird dadurch erreicht, daß einerseits der den Spulenkörper tragende Mittelschenkel nennenswert länger ist als die axiale Länge des auf dem Kernschenkel angeordneten Spulenkörpers, die Länge der außerhalb des Spulenkörpers liegenden Kernschenkel ebenfalls nennenswert größer ist als die axiale Länge des Spulenkörpers und gegebenenfalls die Länge des den Spulenkörper tragenden Mittelschenkels ebenfalls nennenswert größer ist als die Länge der außerhalb des Spulenkörpers liegenden Kernschenkel.

Dieser Hochspannungstransformator mit einem einteiligen, offenen Kern hat mehrere Vorteile. Da kein definierter kleiner Luftspalt zwischen zwei zusammenstoßenden Kernschenkeln gebildet wird, ist ein besonderer Schliff bestimmter Flächen des Kerns nicht mehr erforderlich. Wegen der einteiligen Ausführung sind auch keine Mittel zum Zusammenhalten von zwei Kernhälften notwendig, wie z.B. eine die Kernhälften zusammenhaltende Feder oder Klammer oder ein Klebevorgang. Das Gewicht des Kernes und damit des gesamten Hochspannungstransformators kann um 15 - 25 % verringert werden. Trotz des an sich fehlenden kleinen Luftspaltes zwischen den zusammenstoßenden Enden von zwei Kernschenkeln kann durch geeignete Bemessung zwischen den Kernschenkeln ein Luftspalt gebildet werden, der magnetisch, also für die erforderlichen Eigenschaften des Transformators genügend klein, jedoch mechanisch für die Aufbringung des Spulenkörpers genügend groß ist. Messungen haben ergeben, daß das magnetische Streufeld an der Außenseite des Transformators gegenüber bekannten Transformatoren wesentlich geringer ist. Der Transformator hat keinen seitlichen Luftspalt, der in benachbarten Metallteilen wie Kühlblechen Wirbelströme und damit Verlustwärme erzeugen kann. Es kann außerdem ein billigeres Ferritmaterial verwendet werden, beruhend auf der Tatsache des wesentlich größeren Luftspaltes als bei bekannten Transformatoren. Durch die einteilige Ausführung des Ferritkerns ergeben sich weitere Vorteile beim Einkauf, der Lagerung und dem Behandeln des Kerns bei der Herstellung des Hochspannungstransformators.

Für die Ausführung des Kernes gibt es verschiedenen Möglichkeiten. Vorzugsweise ist der einteilige, offene Kern als E-Kern ausgebildet. Er kann auch als U-Kern oder Topfkern ausgebildet sein. Ebenso können Kernformen verwendet werden, die einen Mittelschenkel mit rundem Querschnitt zur Aufnahme des Spulenkörpers und auf einem Kreisbogen darum mehrere, z.B. drei um 120° gegeneinander versetzte oder vier um 90 gegeneinander versetzte Kernschenkel aufweisen.

Die Weiterbildung wird im folgenden anhand der Figuren 8 - 14 erläutert.

Fig. 8 zeigt den Ferritkern K mit dem Basisschenkel 20 und den beiden parallelen Außenschenkeln 15, 16 jeweils mit rechteckigem Querschnitt sowie den Mittelschenkel 1 mit rundem Querschnitt. Auf dem Mittelschenkel 1 ist der gesamte Spulenkörper angeordnet. Dieser enthält den inneren Spulenkörper 2, auf dem zunächst durch Rippen 18 getrennte Zusatzwicklungen 19 z.B. für die Heizung der Bildröhre, für Betriebsspannungen oder Impulse gewickelt sind. Über den Zusatzwicklungen 19 liegt eine Hülse 17, die einen glatten Wickelgrund für die darauf gewickelte Primärwicklung 3 bildet. Über dem Spulenkörper 2 liegt der Kammerspulenkörper 4 mit der Hochspannungswicklung 6.

Die Länge des Mittelschenkels 1 ist um etwa 40 bis 50 % größer als die Länge L des Spulenkörpers 2, 4. Außerdem ist die Länge des Mittelschenkels 1 etwa 10 bis 20 % größer als die Länge der Außenschenkel 15, 16. Des weiteren ist das Verhältnis aus der Länge L des Spulenkörpers zu dem Durchmesser D des gesamten Spulenkörpers deutlich kleiner als 1 bemessen, in der Praxis etwa zwischen 0,6 und 0,9.

Der Hochspannungstranformator gemäß Fig. 1 mit einem einteiligen Ferritkern hat zwar keinen definierten kleinen, durch zwei zusammenstoßende Kernhälften gebildeten Luftspalt, sondern einen wesentlich größeren magnetisch wirksamen Luftspalt zwischen dem Mittelschenkel 1 und den Außenschenkeln 15, 16. Es hat sich jedoch gezeigt, daß durch die beschriebene Bemessung des Mittelschenkels 1, der Außenschenkel 15, 16 und der Abmessungen des Spulenkörpers 2, 4 die gewünschten magnetischen Eigenschaften erreicht werden können. In der Wirkungsweise sind in dem Transformator gemäß Fig. 1 zwei wirksame Luftspalte parallel geschaltet, nämlich einmal der Luftspalt zwischen dem Außenschenkel 15 und dem Mittelschenkel 1 und zum anderen zwischen dem Außenschenkel 16 und dem Mittelschenkel 1. Durch die beschriebene Bemessung läßt sich erreichen, daß der zwischen den Schenkeln 1, 15, 16 gebildete wirksame Luftspalt magnetisch genügend klein ist für die Erzielung der benötigten Magnetisierungskennlinie des Transformators, andererseits aber mechanisch genügend groß ist, um den Spulenkörper auf den Mittelschenkel 1 aufsetzen zu können.

Wegen der offenen Enden der Kernschenkel 1, 15, 16 nimmt die Induktivität einer auf dem Mittelschenkel 1 angeordnete Wicklung in Richtung zum offenen Kernende stark ab. Wenn diese Induktivität z.B. in Fig. 1 am Übergang zwischen dem Mittelschenkel 1 und dem Basisschenkel 20 mit 100 % angenommen wird, würde diese Induktivität am oberen Ende des Spulenkörpers nur noch 40 % betragen. Diese Tatsache, die mit der Abnahme des magnetischen Flusses durch den Mittelschenkel 1 zu dessen Ende hin erklärt werden kann, läßt sich vorteilhaft folgendermaßen ausnutzen. In der Praxis werden von einem derartigen Transformator Spannungen in der Größenordnung von 5 Volt abgenommen, z.B. für die Heizung der Bildröhre. Für eine derartig geringe Spannung sind nur wenige Windungen notwendig. Da immer nur eine ganz Windungszahl realisiert werden kann, läßt sich die gewünschte Spannung manchmal nicht genau einhalten. Ein genauer Abgleich der Spannung kann nun dadurch erreicht werden, daß die Wicklung auf den Kern in Achsrichtung verschoben wird. Wegen der Abnahme des magneitschen Flusses nimmt dann die in der Wicklung induzierte Spannung zum offenen Ende des Kernschenkels 1 hin ab. Durch axiale Verschiebung der Wicklung auf dem Kern 1 oder durch unterschiedlichen Lagen von Teilwicklungen auf dem Kern 1 kann dann eine Wicklung realisiert werden, die genau die gewünschte Spannung abgibt.

Fig. 9 zeigt eine derartige Ausbildung. Auf dem Spulenkörper 2 sind zwischen den Rippen 18 verschiedene Teilwicklungen 19a-19b in unterschiedlicher axialer Lage angeordnet. Durch eine derartige Aufteilung der gesamten Wicklung und unterschiedliche Axiallage auf dem Kern 1 läßt sich eine Gesamtwicklung mit der jeweils gewünschten Spannung realisieren. Bei jeweils gleicher Windungszahl hat die Teilwicklung 19a eine wesentlich geringere Induktivität und damit auch geringe induzierte Spannung als die Wicklung 19b am Grund des Schenkels 1.

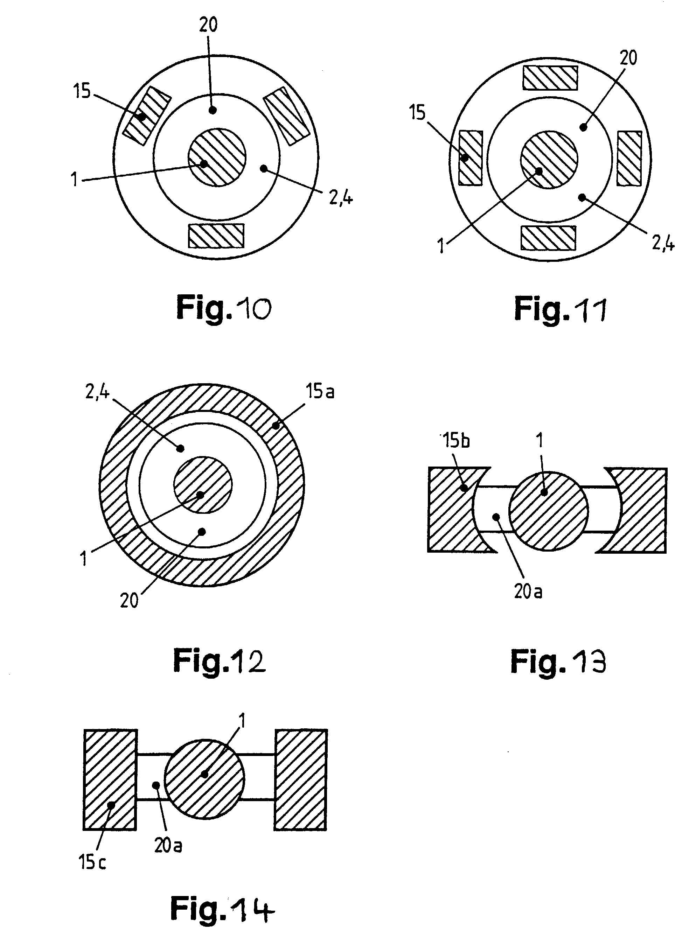

Fig. 10 zeigt eine Abwandlung der Kernform. Der Kern ist im Prinzip so aufgebaut wie in Fig. 1, enthält jedoch drei um 120° gegeneinander versetzte Außenschenkel 15, die auf dem nunmehr rund ausgebildeten Basisschenkel 20 angeordnet sind. Zwischen dem Mittelschenkel 1 und den drei Außenschenkeln 15 ist wieder der Spulenkörper 2, 4 eingefügt.

In Fig. 11 sind auf dem wiederum runden Basisschenkel 20 der Mittelschenkel 1 mit rundem Querschnitt und vier um 90° gegeneinander versetzte Außenschenkel 15 je mit rechteckigen Querschnitt angeordnet.

In Fig. 12 ist der Kern als Topfkern ausgebildet. Der Außenschenkel 15a umgibt dann ringförmig den Mittelschenkel 1 und bildet mit diesem die topförmige Aussparrung zur Aufnahme des Spulenkörpers 2, 4.

Fig. 13 zeigt eine weitere Form des Kernes ohne Spulenkörper. Die Kernschenkel 15b haben an ihrer dem Schenkel 1 zugewandten Seite eine Abrundung mit einem solchen Radius, daß der Abstand zwischen den Schenkeln 1 und dem Schenkel 15b gleich ist und eine optimale Abschirmung erreicht wird. Außerdem ist der die Schenkel 1, 15b verbindende Basisschenkel 20a schmaler ausgebildet als die Schenkel 1 und 15b, hat also gewissermaßen eine Einschnürung. Dadurch kann Material eingespart und der wirksame Kernquerschnitt besser dem wirksamen magnetischen Fluß angepaßt werden. Wenn der Querschnitt des Schenkels 1 mit 100 % angenommen wird, haben die Schenkel 15b und 20a einen Querschnitt von etwa 50 % Durch diese Ausbildung läßt sich außerdem eine Verlängerung der Kennlinie erreichen, die die Abhängigkeit der Induktivität der auf dem Schenkel angeordneten Wicklung von dem die Wicklung durchfließenden Strom darstellt.

Fig. 14 zeigt eine Abwandlung des Kernes nach Fig. 13, bei der lediglich die Schenkel 15c ohne die Abrundung, also im Querschnitt quaderförmig ausgebildet sind.

Durch die geschilderte Abnahme der gebildeten Induktivität zum offenen Ende des Kernschenkels 1 hin kann es vorkommen, daß zwei Wicklungen, die mit zwei oder mehr parallelen Drähten gewickelt sind, durch die unterschiedliche axiale Lage der Windungen unterschiedliche Induktivitäten haben. Dadurch können unerwünschte Ausgleichströme zwischen den beiden Wicklungen entstehen. Dieses läßt sich dadurch praktisch beseitigen, daß für diese Drähte ein sogenannter leicht verseilter Draht verwendet wird. Das ist ein litzen ähnlicher Draht, der aus etwa 3 - 5 Drähten mit einem relativ großen Schlag von etwa 50 mm besteht. Ein derartiger leicht verseilter Litzendraht ist wesentlich billiger als eine echte Litze. Es hat sich gezeigt, daß bei einer Wicklung mit drei parallelen Drähten nebeneinander die unterschiedlichen Induktivitäten der durch die drei Drähte gebildeten Wicklungen besser beherrscht werden können. Das gilt insbesondere für die lagenweise gewickelte Primärwicklung 3.

## Patentansprüche

1. Hochspannungs-Zeilentransformator für einen Fernsehempfänger mit einem Spulenkörper (2) für eine Primärwicklung (3) und mit einem diesen umgebenden Kammerspulenkörper (4) mit einer Hochspannungswicklung (6) und einer Vielzahl von nach dem Diodensplitprinzip geschalteten Dioden (7), **dadurch gekennzeichnet**, daß das Verhältnis der Gesamtlänge (L) der Wicklungen in Axialrichtung zum äußeren Durchmesser (D) der Hochspannungswicklung (6) 0,5 bis 0,85 beträgt, und daß mehrere Dioden (7) über den Umfang des Kammerspulenkörpers (4) verteilt in derselben axialen Lage an dem Kammerspulenkörper (4) angeordnet sind.

2. Transformator nach Anspruch 1, **dadurch gekennzeichnet**, daß jeweils Gruppen von vier Dioden (7a - 7d) über den Umfang verteilt am äußeren Umfang des Kammerspulenkörpers (4) in derselben axialen Lage angeordnet sind.

3. Transformator nach Anspruch 1, **dadurch gekennzeichnet**, daß die Primärwicklung (3) als Lagenwicklung mit mehreren übereinander liegenden Lagen ausgebildet und das Wicklungsende aus der unteren Lage zum Abschluß an die Betriebsspannung (UB) und das Wicklungsende aus der oberen Lage zum Anschluß an einen periodischen Schalter vorgesehen ist.

4. Transformator nach Anspruch 1 oder 2, **dadurch gekennzeichnet**, daß nur an den Kammerwänden (14a, 14f) an den beiden Enden des Spulenkörpers (2) jeweils mehrere über den Umfang verteilte Dioden (7a - 7h) angeordnet sind.

5. Transformator nach Anspruch 1, **dadurch gekennzeichnet**, daß der Ferritkern (K) als einteiliger Kern mit offenen Enden der Kernschenkel (1, 15, 16) ausgebildet ist.

6. Transformator nach Anspruch 5, **dadurch gekennzeichnet**, daß der Ferritkern (K) als E-Kern ausgebildet ist.

7. Transformator nach Anspruch 5, **dadurch gekennzeichnet**, daß der Ferritkern (K) als Topfkern ausgebildet ist.

8. Transformator nach Anspruch 5, **dadurch gekennzeichnet**, daß der Kern einen den Spulenkörper (2, 4) tragenden Mittelschenkel (1) mit rundem Querschnitt und um diesen herum in verschiedenen Winkelpositionen mehrere Außenschenkel (15) aufweist.

9. Transformator nach Anspruch 5, **dadurch gekennzeichnet**, daß eine Wicklung (19b) sich nur über einen vom offenen Ende des Kernschenkels (1) abgewandten Teil der axialen Länge des Spulenkörpers erstreckt.

10. Transformator nach Anspruch 8, **dadurch gekennzeichnet**, daß eine bestimmte Induktivität oder Ausgangsspannung einer auf dem Mittelschenkel (1) angeordneten Wicklung (19) durch axiale Verschiebung der Wicklung auf dem Schenkel (1) oder durch Verteilung von Teilwicklungen (19a, 19b) über die axiale Länge des Schenkels (1) eingestellt ist.

## Claims

1. High tension line transformer for a television receiver including a coil former (2) for a primary winding (3), a compartmentalised coil former (4) for the high tension winding (6) surrounding the latter and a plurality of diodes (7), connected according to the diode split principle, characterised in that
the ratio of the total length (L) of the windings in the axial direction to the outer diameter (D) of the high tension winding (6) amounts to 0,5 until 0,85, and that there are arranged on the compartmentalised coil former (4) respective pluralities of diodes (7) distributed over the periphery of the compartmentalised coil former (4) in the same axial position.

2. Transformer in accordance with claim 1, characterised in that, respective groups of four diodes (7a - 7d) distributed over the periphery are arranged in the same axial position at the outermost periphery of the compartmentalised coil former (4).

3. Transformer in accordance with claim 1, characterised in that, the primary winding (3) is formed as a layered winding having a plurality of superimposed layers and the end of the winding from the lower layer is provided for the termination on the operating voltage (UB) and the end of the winding from the upper layer is provided for the connection to a periodic switch.

4. Transformer in accordance with claim 1 or 2, characterised in that, respective pluralities of diodes (7a - 7h) distributed over the periphery are arranged only on the walls of the chambers (14a, 14f) at the two ends of the coil former (2).

5. Transformer in accordance with claim 1, characterised in that, the ferrite core (K) is formed as a one piece core having open ends of the core legs (1, 15, 16).

6. Transformer in accordance with claim 5, characterised in that, the ferrite core (K) is formed as an E-core.

7. Transformer in accordance with claim 5, characterised in that, the ferrite core (K) is formed as a pot core.

8. Transformer in accordance with claim 5, characterised in that, the core has a central leg (1) having a rounded section carrying the coil former (2, 4) and a plurality of outer legs (15) located around this at different angular positions.

9. Transformer in accordance with claim 5, characterised in that, a winding (19b) only extends over a portion of the axial length of the coil former that is remote from the open end of the core leg (1).

10. Transformer in accordance with claim 8, characterised in that, a specific inductance or output voltage of a winding (19) arranged on the central leg (1) is set by axial displacement of the winding on the leg (1) or by distributing partial windings (19a, 19b) over the axial length of the leg (1).

## Revendications

1. Transformateur de ligne à haute tension pour un récepteur de télévision avec un support de bobine (2) pour un enroulement primaire (3) et avec un support de bobine à chambres (4) entourant ce demier avec un enroulement haute tension (6) et une série de diodes (7) connectées selon le principe de partage des diodes, **caractérisé en ce que** le rapport longueur totale (L) des enroulements dans le sens axial sur diamètre extérieur (D) de l'enroulement haute tension (6) est compris entre 0,5 et 0,85 et que plusieurs diodes (7) sont réparties dans la même section axiale du support de bobine à chambres (4) sur la circonférence du support de bobine à chambres (4).

2. Transformateur selon la revendication 1, **caractérisé en ce que** des groupes de quatre diodes chacun (7a à 7d) sont répartis dans la même section axiale sur la circonférence du support de bobine à chambres (4).

3. Transformateur selon la revendication 1, **caractérisé en ce que** l'enroulement primaire (3) est conçu comme enroulement à sections avec plusieurs sections consécutives et l'extrémité de l'enroulement de la section inférieure est prévue pour la connexion à la tension de service (UB) et l'extrémité de l'enroulement de la section supérieure est prévue pour la connexion à un commutateur périodique.

4. Transformateur selon la revendication 1 ou 2, **caractérisé en ce que** plusieurs diodes (7a à 7h) sont disposées au niveau des parois de chambre (14a, 14f) aux deux extrémités du support de bobine (2) sur sa circonférence.

5. Transformateur selon la revendication 1, **caractérisé en ce que** le noyau de ferrite (K) est un noyau en une seule pièce dont les extrémités de branches de noyau (1, 15, 16) sont ouvertes.

6. Transformateur selon la revendication 5, **caractérisé en ce que** le noyau de ferrite (K) est un noyau en E.

7. Transformateur selon la revendication 5, **caractérisé en ce que** le noyau de ferrite (K) est un pot de ferrite.

8. Transformateur selon la revendication 5, **caractérisé en ce que** le noyau possède une branche centrale (1) à section ronde portant les supports de bobines (2, 4) et plusieurs branches (15) placées autour de la branche centrale selon différents angles.

9. Transformateur selon la revendication 5, **caractérisé en ce qu**'un enroulement (19b) s'étend uniquement sur une partie de la longueur axiale du support de bobine dans la direction opposée à l'extrémité ouverte de la branche de noyau (1).

10. Transformateur selon la revendication 5, **caractérisé en ce que** le réglage d'une inductance ou d'une tension de sortie donnée pour l'enroulement (19) installé sur la branche centrale (1) est réalisé par décalage de l'enroulement sur la branche (1) dans le sens axial ou par répartition des enroulements partiels (19a, 19b) sur la longueur axiale de la branche (1).
